# EUROPEAN PATENT SPECIFICATION

(11) **EP 0 838 749 B1**
(45) Date of publication and mention of the grant of the patent: **16.10.2002**
(21) Application number: 97304844.0
(22) Date of filing: 03.07.1997
(51) Int. Cl.: G06F 1/16

(54) **Thin structure information processing apparatus**
Informationsverarbeitungsgerät von dünner Struktur
Appareil de traitement d'information de structure mince

(30) Priority: 24.10.1996 JP 28238596
(43) Date of publication of application: 29.04.1998
(60) Divisional application: 99123912.0
(73) Proprietor: FUJITSU LIMITED, Kawasaki-shi, Kanagawa 211-8588 (JP)
(72) Inventor: Shin, Takahiro, c/o Fujitsu Limited, Kawasaki-shi, Kanagawa 211 (JP); Ohnishi, Masuo, c/o Fujitsu Limited, Kawasaki-shi, Kanagawa 211 (JP)
(74) Representative: Hitching, Peter Matthew

(56) References cited:
- US-A- 5 132 876
- US-A- 5 237 486
- US-A- 5 325 262
- PATENT ABSTRACTS OF JAPAN vol. 018, no. 327 (P-1757), 21 June 1994 & JP 06 075661 A (SOOTEC:KK), 18 March 1994,

## Description

This invention relates to an information processing apparatus such as a notebook-type personal computer, a word processor, and so forth. More particularly, it relates to an information processing apparatus having a thin structure.

As the portability of an information processing apparatus, such as a portable computer, has been improved in recent years, a small thickness has been required. Therefore, an information processing apparatus having a small thickness must be provided.

In conventional information processing apparatuses, the internal modules and units that make up the information processing apparatus are arranged in superposition with one another in the height direction. For example, a built-in battery and a built-in hard disk drive (HDD) are disposed below a keyboard module or a main board. In the conventional information processing apparatus, an upward connector is disposed on the surface of the main board facing the keyboard module. When two PC card slots are provided in such a conventional information processing apparatus, they are disposed in a stack form in the direction of height.

As examples of the prior art references, Japanese Unexamined Patent Publication (Kokai) Nos. 8-76887 and 8-76898 describe an information processing apparatus having a reduced thickness structure. Japanese Unexamined Patent Publication (Kokai) No. 8-76885 discloses an information processor equipped with speakers mounted to a substrate for peripheral processing and for a speaker, and Japanese Unexamined Patent Publication (Kokai) No. 8-76886 discloses a structure wherein a cover casing to which a liquid crystal display is fitted is provided with a reduced thickness.

As described above, the thickness of conventional information processing apparatus is the sum of the height of respective internal modules disposed in superposition with one another, and becomes greater than the height of each internal module by the superposition thickness.

Another thin structure information processing apparatus, disclosed in US 5237486, may be considered to comprise: a body of said information processing apparatus, said body having a substantially planar structure and accommodating therein at least a main board; a built-in hard disk drive; and a keyboard module.

In this apparatus, the built-in hard disk drive and main board are arranged so that they do not overlap one another when viewed in a direction perpendicular to a main plane of the body. A special frame, made of magnesium alloy, is placed between upper and lower case halves for providing increased structural strength, thermal cooling and electromagnetic shielding.

US 5132876 discloses a notebook computer which has a unitary upper cover and keyboard unit, a motherboard, a hard disk drive, a rechargeable battery and a power supply unit. The computer has no body accommodating therein these elements and instead the external surfaces of the elements when assembled together directly provide the external surfaces of the computer.

JP-A-06-075661 discloses a portable computer having a single PC-card slot in one side of the casing of the computer. As an alternative to accepting a standard PC-card, the PC-card slot is adapted specially to accept a floppy disk drive (FDD) unit packaged in a package of the same size as a standard PC-card. The PC-card slot of the computer has an FDD connector arranged side-by-side with the usual PC-card connector, and the FDD unit has its input/output connector on the other side of its inserted edge to the input/output connector of the standard PC-card, so that the FDD unit's input/output connector engages only with the computer's FDD connector when the FDD unit is inserted in the slot, and the PC-card's input/output connector engages only with the computer's PC-card connector when the PC-card is inserted in the slot.

A thin structure information processing apparatus embodying the present invention is-characterised by a power supply board; and a built-in battery; and in that said main board, said power supply board, said built-in battery and said built-in hard disk drive are arranged across a main plane of said substantially planar structure in such a manner that, when viewed in a direction perpendicular to said main plane, those elements do not overlap one another; and said main board and said keyboard module are arranged substantially in parallel with one another and with said main plane so that a gap extending in the said direction is defined between the main board and the keyboard module; and said body has at least one card slot, into which a card for extending the functions of the apparatus is removably insertable, which slot is arranged so that the card, when received in the slot, is located within said gap and in parallel with said main plane.

Such an information processing apparatus further promotes the reduction in thickness and improves portability.

In conventional thin structure information processing apparatus, a gap is necessary between the main board and the keyboard module so that the connector and cables can be disposed inside it. In a preferred embodiment of the present invention, said main board is provided with at least one connector which, projects upward from an upper surface of said main board and which is arranged at a position other than an area where said keyboard module overlaps said main board when viewed in said direction.

Also, in conventional thin structure information processing apparatus, when two PC card slots are installed, the thickness becomes greater than when one PC card slot is disposed. In another preferred embodiment of the present invention, the processing apparatus has at least two such card slots, each for receiving a card for extending the functions of the apparatus, which slots are arranged so that the cards, when received respectively in the said slots, are located within said gap and do not overlap one another when viewed in the said direction.

Reference will now be made, by way of example, to the accompanying drawings in which:
Fig. 1 is a plan view showing the disposition and planar construction of internal modules of an information processing apparatus embodying the present invention;
Fig. 2 is a perspective view showing the disposition and construction of the internal modules of the Figure 1 information processing apparatus when they are viewed from an oblique direction;
Fig. 3 is a side view showing the disposition of an upward connector disposed on a main board;
Fig. 4 is a side view showing the disposition of PC-card slots;
Fig. 5 is a side view showing the disposition of the internal modules of an information processing apparatus embodying the present invention;
Fig. 6 is a side view showing the disposition of a connector of a main board in a previously considered information processing apparatus; and
Fig. 7 shows six views of a thin information processing apparatus according to one embodiment of the present invention.

Hereinafter, information processing apparatuses according to preferred embodiments of the present invention will be explained in detail with reference to the accompanying drawings.

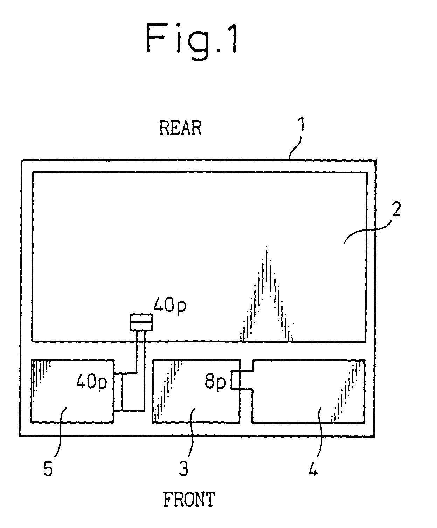

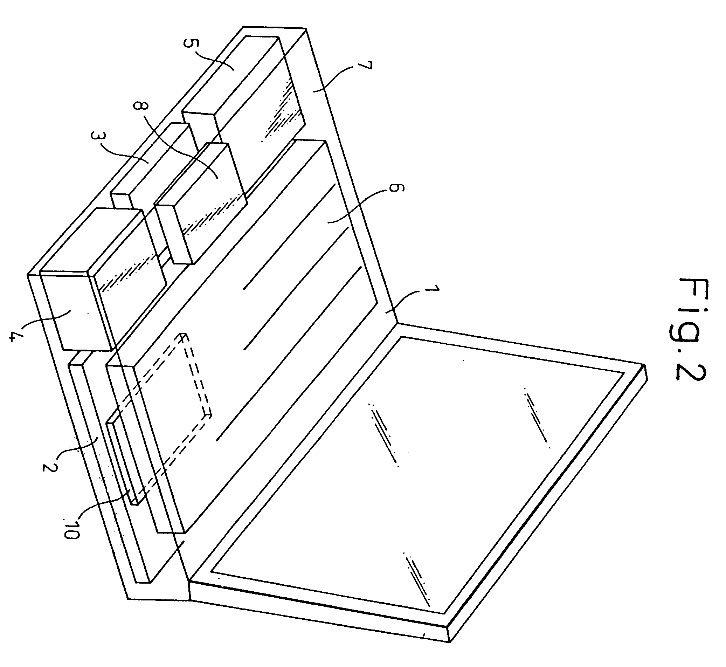

Fig. 1 is a plan view showing the disposition and construction of internal modules of an information processing apparatus embodying the present invention, and Fig. 2 is a perspective view when the disposition and construction is viewed from the oblique direction. In the drawings, reference numeral 1 denotes a main body of an information processing apparatus, reference numeral 2 denotes a main board, reference numeral 3 denotes a power supply board, reference numeral 4 denotes a built-in battery, reference numeral 5 denotes a built-in HDD (hard disk drive), reference numeral 6 denotes a keyboard module, reference numeral 7 denotes a palm rest, reference numeral 8 denotes a pointing device, and reference numeral 10 denotes a PC-card slot. As shown in Fig. 1, the main board 2 is positioned in a wide rear area away from the side of an operator (not shown). The power supply board 3 is disposed at the center of the front part of the main board 2, the built-in battery 4 is disposed on the right side and the built-in HDD 5 is disposed on the left side. Further, these members are so disposed as not to overlap with one another plane-wise, i.e. when viewed in a direction perpendicular to a main plane of the body. Incidentally, the main body 1 and the built-in HDD 5 are connected by cables and a connector, and the power supply board 3 and the built-in battery 4 are connected by a connector.

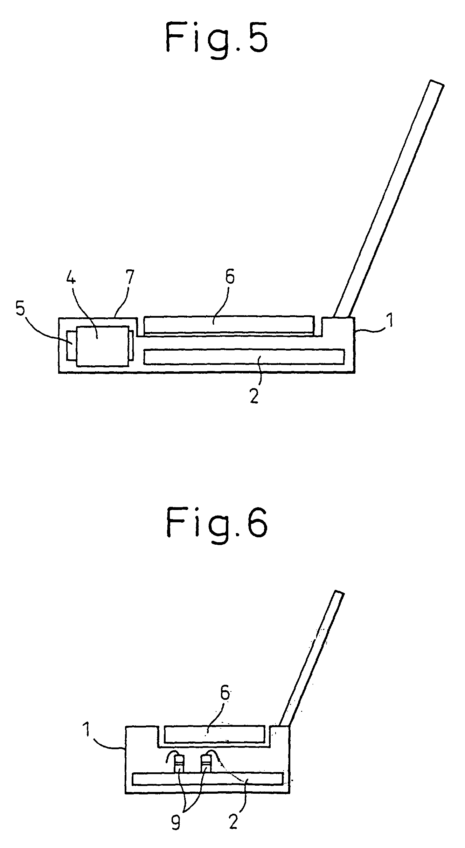

The built-in battery 4 and the built-in HDD 5 at the right and left sides of the front portion have a relatively large height, are not therefore-disposed below the keyboard module 6 but are disposed below the palm rest 7 where the greatest height can be secured (see also Fig. 5). The power supply board 3 at the center of the front portion is lower than the built-in battery 4 and the built-in HDD 5, and is therefore disposed below the pointing device 8 for moving a cursor.

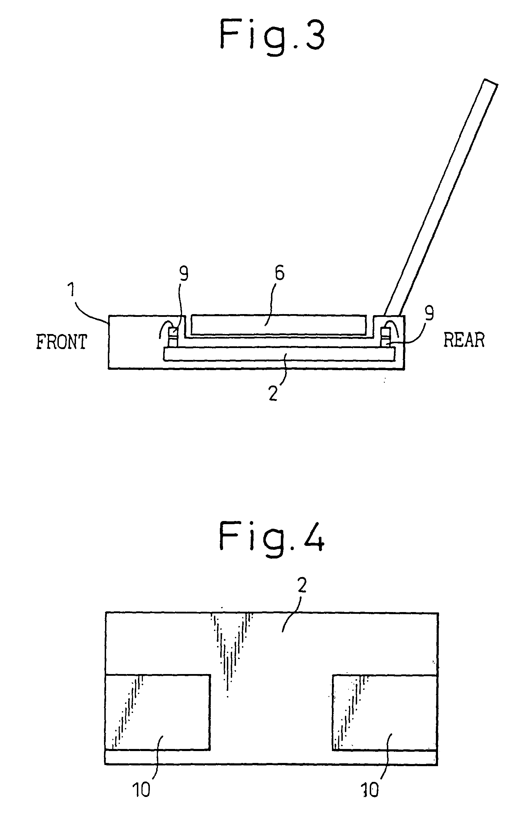

Since the main board 2 has a relatively small thickness, it is disposed in superposition with the keyboard module 6. As shown in Fig. 3, however, the upward connector 9 connected to the main board 2 is disposed at a position other than the overlapping position of the main board 2 with the keyboard module 6, such as at the front and rear end positions of the main board 2 deviated from the area of the keyboard module 6 as viewed from the side of the operator (not shown). Other electronic components (not shown) disposed on the main board 2 are far thinner than the connector 9. Therefore, even when they are disposed at overlapping positions with the keyboard module 6, the internal thickness of the information processing apparatus does not increase much as a whole. In consequence, the necessary internal thickness can be much reduced in comparison with previously-considered information processing apparatuses (an example of which is shown in Fig. 6) wherein the connector 9 is disposed below the keyboard module 6.

By the way, the upward connector 9 may be disposed at any position of the main board 2 other than the overlapping position between the main board 2 and the keyboard module 6. For example, it can be disposed at the left end and/or at the right end of the main board 2.

Fig. 4 shows the positional relationship between the main board 2 and PC-card slots 10 when two card for extending the functions, that is, two PC-card slots 10, are disposed. As shown in this drawing, the two PC-card slots 10 are disposed at the right and left position of the main board so as not to overlap with each other as viewed from the side of the operator (not shown). Each PC-card slot 10 is disposed between the main board 2 and the keyboard module 6 as shown in Fig. 2. Therefore, the operator can load the necessary PC-cards (not shown) from the right and left side surfaces of the information processing apparatus. Incidentally, though only one PC-card slot 10 is shown disposed on the right side in Fig. 2, two PC-card slots 10 can be disposed on both right and left sides. Furthermore, an additional PC-card slot may, of course, be disposed in addition to the right and left positions, if possible.

In order to further reduce the thickness, the portion of the main board 10 corresponding to the disposition portion of the PC-card slot 10 may be cut off, and each PC-card slot can be disposed at this notch portion.

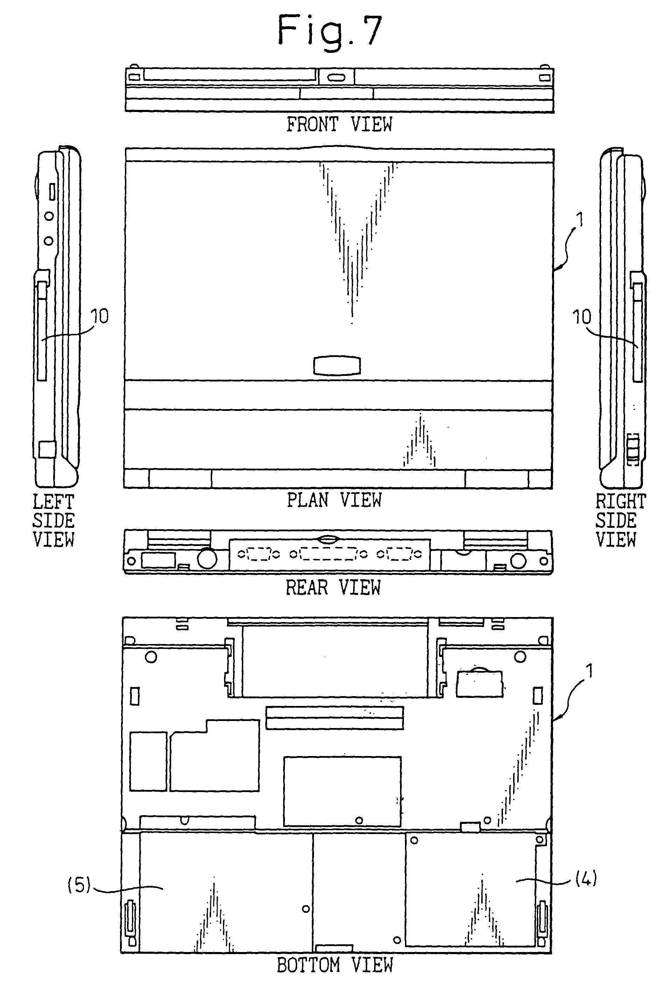

Fig. 7 shows the appearance of an information processing apparatus embodying the present invention by six views. The outer dimension of the information processing apparatus 1 of this invention is 297 mm width, 232 mm depth and 28.2 mm height, and the thickness can be thus reduced.

In apparatus embodying the present invention, as described above, the main board, the power supply board,the built-in battery and the built-in HDD are disposed in such a manner as not to overlap with one another, at portions other than the connector portions for connecting them, respectively. Therefore, the necessary internal thickness of the information processing apparatuses can be made smaller than that of previously-considered apparatuses, and embodiments of the present invention can contribute to the reduction of the thickness and to the improvement of portability of the information processing apparatus.

Because in the described embodiment the built-in battery and the built-in HDD are not disposed below the keyboard module but are disposed below the palm rest portion where the greatest height can be secured, this embodiment of the present invention can contribute to the reduction of thickness of the information processing apparatus and to the improvement of its portability.

Because in the described embodiment the upwand correctors of the main board are disposed at the positions other than the position immediately below the keyboard module such as at the front end or the rear end when the main board is viewed from the front, the thickness of the apparatus can be reduced by the overlapping thickness with the keyboard module. Therefore, this embodiment of the present invention can contribute to the reduction of the thickness of the apparatus and to the improvement of its portability.

Furthermore, because in another embodiment the two PC-card slots are disposed so as not to be superposed in the direction of thickness, the provision of such PC-card slots does not invite an increase in the thickness but can contribute to the reduction of the thickness of the information processing apparatus and to the improvement of its portability.

It should be understood by those skilled in the art that the foregoing description relates to only a preferred embodiment of the disclosed invention, and that various changes and modifications may be made to the invention without departing from the scope thereof as defined in the appended claims.

## Claims

1. A thin structure information processing apparatus comprising:
a body (1) of said information processing apparatus, said body having a substantially planar structure and accommodating therein at least
a main board (2);
a built-in hard disk drive (5); and
a keyboard module (6);
a power supply board (3); and
a built-in battery (4);
**characterised:**
**in that** said main board, said power supply board, said built-in battery and said built-in hard disk drive are arranged across a main plane of said substantially planar structure in such a manner that, when viewed in a direction perpendicular to said main plane, those elements (2-5) do not overlap one another; and
said main board (2) and said keyboard module (6) are arranged substantially in parallel with one another and with said main plane so that a gap extending in the said direction is defined between the main board and the keyboard module; and
said body (1) has at least one card slot (10), into which a card for extending the functions of the apparatus is removably insertable, which slot is arranged so that the card, when received in the slot, is located within said gap and in parallel with said main plane.

2. A processing apparatus as set forth in claim 1, wherein said body (1) has, adjacent to and in front of said keyboard module, a palm rest (7) at an area which is above said built-in battery (4).

3. A processing apparatus as set forth in claim 1 or 2, wherein said body (1) has, adjacent and in front of said keyboard module, a palm rest (7) at an area which, when the apparatus is in an in-use disposition, is above said built-in hard disk drive (5).

4. A processing apparatus as set forth in any one of claims 1 to 3, wherein the said body has a front portion nearest to an operator of the apparatus and a rear portion further away from the operator than said front portion, and said power supply board (3), said built-in battery (4), and said built-in hard disk drive (5) are arranged in said front portion of said body, and said main board (2) and said keyboard module (6) are arranged in said rear portion of said body.

5. A processing apparatus as set forth in any one of claims 1 to 4, wherein said main board (2) is provided with at least one connector (9) which projects upward from an upper surface of said main board and which is arranged at a position other than an area where said keyboard module (6) overlaps said main board when viewed in said direction.

6. A processing apparatus as set forth in claim 5, wherein said main board (2) is provided with at least two such connectors (9) projecting upward from the upper surface of said main board, at least one of which connectors is arranged beyond a first edge of said keyboard module and at least another one of which connectors is arranged beyond a second edge of said keyboard module.

7. A processing apparatus as set forth in any one of claims 1 to 6, having at least two such card slots (10), each for receiving a card for extending the functions of the apparatus, which slots are arranged so that the cards, when received respectively in the said slots, are located within said gap at different positions across said main plane and do not overlap one another when viewed in the said direction.

8. A processing apparatus as set forth in claim 7, wherein one of said card slots is located on a first side of said body and a further one of said card slots is located on a second side of said body, said first and second sides being on the left and right sides respectively of an operator of the apparatus.

9. A processing apparatus as set forth in any one of claims 1 to 8, wherein said main board (2) has a notch portion extending inwardly from one edge thereof, where the board is not present, which notch portion is arranged for accommodating such a card when received in the, or in one such, card slot.

10. A processing apparatus as set forth in any preceding claim, wherein the or each said card slot is a PC-card slot.

## Patentansprüche

1. Informationsverarbeitungsvorrichtung mit dünner Struktur, die umfaßt:
einen Körper (1) der Informationsverarbeitungsvorrichtung, welcher Körper eine im wesentlichen planare Struktur hat und wenigstens
eine Hauptleiterplatte (2);
ein eingebautes Festplattenlaufwerk (5) ;
ein Tastaturmodul (6);
eine Energiezufuhrplatte (3) und
eine eingebaute Batterie (4)
enthält;
**dadurch gekennzeichnet, daß** die Hauptleiterplatte, die Energiezufuhrplatte, die eingebaute Batterie und das eingebaute Festplattenlaufwerk quer über eine Hauptebene der im wesentlichen planaren Struktur in solch einer Weise angeordnet sind, daß aus der Sicht in einer Richtung, die zu der Hauptebene senkrecht ist, jene Elemente (2-5) einander nicht überlappen; und
die Hauptleiterplatte (2) und das Tastaturmodul (6) im wesentlichen parallel zueinander und zu der Hauptebene so angeordnet sind, daß ein Spalt, der sich in der genannten Richtung erstreckt, zwischen der Hauptleiterplatte und dem Tastaturmodul definiert ist; und
der Körper (1) wenigstens einen Karteneinbauplatz (10) hat, in den eine Karte zum Erweitern der Funktionen der Vorrichtung lösbar einsetzbar ist, welcher Einbauplatz so angeordnet ist, daß die Karte, wenn sie in dem Einbauplatz enthalten ist, innerhalb des Spaltes und parallel zu der Hauptebene angeordnet ist.

2. Verarbeitungsvorrichtung nach Anspruch 1, bei der der Körper (1) eine Handflächenauflage (7), die an das Tastaturmodul angrenzt und vor diesem positioniert ist, in einem Bereich hat, der über der eingebauten Batterie (4) liegt.

3. Verarbeitungsvorrichtung nach Anspruch 1 oder 2, bei der der Körper (1) eine Handflächenauflage (7), die an das Tastaturmodul angrenzt und vor diesem positioniert ist, in einem Bereich hat, der dann, wenn die Vorrichtung in einer Gebrauchsstellung ist, über dem eingebauten Festplattenlaufwerk (5) liegt.

4. Verarbeitungsvorrichtung nach irgendeinem der Ansprüche 1 bis 3, bei der der Körper einen vorderen Abschnitt hat, der einem Bediener der Vorrichtung am nächsten ist, und einen hinteren Abschnitt, der von dem Bediener weiter als der vordere Abschnitt entfernt ist, und die Energiezufuhrplatte (3), die eingebaute Batterie (4) und das eingebaute Festplattenlaufwerk (5) in dem vorderen Abschnitt des Körpers angeordnet sind und die Hauptleiterplatte (2) und das Tastaturmodul (6) in dem hinteren Abschnitt des Körpers angeordnet sind.

5. Verarbeitungsvorrichtung nach irgendeinem der Ansprüche 1 bis 4, bei der die Hauptleiterplatte (2) mit wenigstens einem Verbinder (9) versehen ist, der aus einer oberen Fläche der Hauptleiterplatte nach oben herausragt und an einer Position angeordnet ist, die nicht ein Bereich ist, wo das Tastaturmodul (6) die Hauptleiterplatte aus der Sicht in der genannten Richtung überlappt.

6. Verarbeitungsvorrichtung nach Anspruch 5, bei der die Hauptleiterplatte (2) mit wenigstens zwei solchen Verbindern (9) versehen ist, die aus der oberen Fläche der Hauptleiterplatte nach oben herausragen, von welchen Verbindern wenigstens einer jenseits eines ersten Randes des Tastaturmoduls angeordnet ist und von welchen Verbindern wenigstens ein anderer jenseits eines zweiten Randes des Tastaturmoduls angeordnet ist.

7. Verarbeitungsvorrichtung nach irgendeinem der Ansprüche 1 bis 6, die wenigstens zwei solche Karteneinbauplätze (10) jeweils zum Aufnehmen einer Karte zum Erweitern der Funktionen der Vorrichtung hat, welche Einbauplätze so angeordnet sind, daß die Karten, wenn sie jeweilig in den Einbauplätzen enthalten sind, innerhalb des Spaltes an verschiedenen Positionen quer über die Hauptebene angeordnet sind und aus der Sicht in der genannten Richtung einander nicht überlappen.

8. Verarbeitungsvorrichtung nach Anspruch 7, bei der einer der Karteneinbauplätze auf einer ersten Seite des Körpers angeordnet ist und ein weiterer der Karteneinbauplätze auf einer zweiten Seite des Körpers angeordnet ist, welche ersten und zweiten Seiten jeweilig auf den linken und rechten Seiten von einem Bediener der Vorrichtung liegen.

9. Verarbeitungsvorrichtung nach irgendeinem der Ansprüche 1 bis 8, bei der die Hauptleiterplätte (2) einen Kerbabschnitt hat, der sich von einem Rand von ihr einwärts erstreckt, wo die Leiterplatte nicht vorhanden ist, welcher Kerbabschnitt zum Aufnehmen solch einer Karte angeordnet ist, wenn sie in dem oder in einem solchen Einbauplatz angeordnet ist.

10. Verarbeitungsvorrichtung nach irgendeinem vorhergehenden Anspruch, bei der der oder jeder Karteneinbauplatz ein PC-Karten-Einbauplatz ist.

## Revendications

1. Appareil de traitement d'informations à structure mince comprenant :
un corps (1) dudit appareil de traitement d'informations, ledit corps ayant une structure sensiblement planaire et recevant à l'intérieur au moins
un circuit principal (2) ;
une unité de disque dur encastrée (5) ; et
un module de clavier (6) ;
une carte d'alimentation (3) ; et
un accumulateur encastré (4) ;
**caractérisé en ce que** ledit circuit principal, ladite carte d'alimentation, ledit accumulateur encastré et ladite unité de disque dur encastrée sont disposées dans un plan principal de ladite structure sensiblement planaire de telle manière que, en regardant dans une direction perpendiculaire audit plan principal, ces éléments (2-5) ne se recouvrent pas mutuellement ; et
ledit circuit principal (2) et ledit module de clavier (6) sont disposés sensiblement en parallèle entre eux et avec ledit plan principal de sorte qu'un intervalle s'étendant dans ladite direction est défini entre le circuit principal et le module de clavier ; et
ledit corps (1) possède au moins une fente de carte (10), dans laquelle une carte, afin d'étendre les fonctions de l'appareil, peut être introduite de façon amovible, fente qui est disposée de sorte que la carte, lorsqu'elle est reçue dans la fente, est située à l'intérieur dudit intervalle et en parallèle avec ledit plan principal.

2. Appareil de traitement selon la revendication 1, dans lequel ledit corps (1) possède, adjacent à et devant ledit module de clavier, un repose-paume (7) en une zone se trouvant au-dessus dudit accumulateur encastré (4).

3. Appareil de traitement selon la revendication 1 ou 2, dans lequel ledit corps (1) possède, adjacent et devant ledit module de clavier, un repose-paume (7) en une zone qui, lorsque l'appareil est en utilisation, se trouve au-dessus de ladite unité de disque dur encastré (5).

4. Appareil de traitement selon l'une quelconque des revendications 1 à 3, dans lequel ledit corps possède une partie antérieure la plus proche d'un opérateur de l'appareil et une partie postérieure plus éloignée de l'opérateur que ladite partie antérieure, et ladite carte d'alimentation (3), ledit accumulateur encastré (4), et ladite unité de disque dur encastrée (5) sont disposés dans ladite partie antérieure dudit corps, et ledit circuit principal (2) et ledit module de clavier (6) sont disposés dans ladite partie postérieure dudit corps.

5. Appareil de traitement selon l'une quelconque des revendications 1 à 4, dans lequel ledit circuit principal (2) est muni d'au moins un connecteur (9) faisant saillie verticalement depuis une surface supérieure dudit circuit principal et qui est disposé en une position autre qu'une zone où ledit module de clavier (6) recouvre ledit circuit principal en regardant dans ladite direction.

6. Appareil de traitement selon la revendication 5, dans lequel ledit circuit principal (2) est équipé d'au moins deux connecteurs (9) faisant saillie verticalement depuis la surface supérieure dudit circuit principal, dont au moins un des connecteurs est disposé au-delà d'un premier bord dudit module de clavier et au moins un autre connecteur est disposé au-delà d'un second bord dudit module de clavier.

7. Appareil de traitement selon l'une quelconque des revendications 1 à 6, possédant au moins deux fentes de cartes (10), chacune pour recevoir une carte afin d'étendre les fonctions de l'appareil, fentes qui sont disposées de sorte que les cartes, lorsqu'elles sont reçues respectivement dans lesdites fentes, sont situées à l'intérieur dudit intervalle en des positions différentes à travers ledit plan principal et ne se recouvrent pas mutuellement en regardant dans ladite direction.

8. Appareil de traitement selon la revendication 7, dans lequel une desdites fentes de carte est située sur un premier côté dudit corps et une autre desdites fentes de carte est située sur un second côté dudit corps, lesdits premier et second côtés étant sur les côtés gauche et droit respectivement d'un opérateur de l'appareil.

9. Appareil de traitement selon l'une quelconque des revendications 1 à 8, dans lequel ledit circuit principal (2) possède une encoche s'étendant vers l'intérieur depuis un bord de celui-ci, où le circuit n'est pas présent, encoche qui est disposée pour loger une telle carte lorsqu'elle est reçue dans la ou dans une de ces fentes de cartes.

10. Appareil de traitement selon l'une quelconque des revendications précédentes, dans lequel la ou chacune desdites fentes de carte est une fente de carte PC.
